# EUROPEAN PATENT SPECIFICATION

(11) **EP 1 731 330 B1**
(45) Date of publication and mention of the grant of the patent: **26.06.2013**
(21) Application number: 06011186.1
(22) Date of filing: 31.05.2006
(51) Int. Cl.: B44C 5/00, B44F 11/00, C04B 41/89

(54) **Method for manufacturing material like antique tiles**
Methode zur Herstellung von Material wie antike Fliesen
Méthode de fabrication d'un matériel comme du carrelage antique

(30) Priority: 06.06.2005 TR 200502114
(43) Date of publication of application: 13.12.2006
(73) Proprietor: TUBITAK, Ankara (TR)
(72) Inventor: Okyar, Fusun, 41470 Gebze/Kocaeli (TR); Kavakli, Bayise, 41470 Gebze/Kocaeli (TR); Zeybekoglu, H.Güniz, Istambul (TR); Kiliç, Aysen, 41470 Gebze/Kocaeli (TR); Kaymak, Ergin, deceased (TR)
(74) Representative: Yavuzcan, Alev

(56) References cited:
- US-A- 4 418 121
- DATABASE WPI Week 199139 Thomson Scientific, London, GB; AN 1991-286955 XP002636322, & SU 1 622 356 A1 (URALS KIROV POLY) 23 January 1991 (1991-01-23)

## Description

### BACKGROUND OF THE INVENTION

### 1. Technical Field of the Invention

This invention relates to manufacturing method for decorative materials having the property of antique tiles.

### 2. Description of the Prior Art

In recent years, the functional and decoration usage of antique-like construction materials in modern buildings has gained a great importance. The usage of these materials after modemization is very important in means of reflection of cultural properties, transferring from generation to generation and protection. On the other hand, the demands for the usage of antique-like materials in studies of the conservation and restoration are increasing gradually.

Although the manufacturing of ceramic tiles is made in most studies, there has not been a study about the manufacturing of antique-like decorative material. In recent years, patent studies were generally made on tite design having an antique pattern, materials used in the manufacturing of files, mounting methods for tiles, the mould equipments designed for the manufacturing tile.

This present invention however contains to obtain a new product which is modernized without changing its structure and composition, to make the antique-like quartz based tiles, that has special design identity, specific with its structure and composition, reflecting cultural properties, that is useable again nowadays.

In the patent document TR 1997 1428, coating printing inks and dispersants are described which were strengthened by UV. There is nothing about manufacturing an antique-like tile.

TR 2000 741 patent is related with the mould equipment for the production of single layer thin mosaic tiles, instead of two layer tile which is thick, porous and relatively weaker than single layer. These are used in building industry. Decorative and antique-like properties have not been touched on.

Patent document US 4 418 121 describes a method for manufacturing a tile for construction representing antique patterns. The said tile is obtained by providing the industrial wastes from refractory bricks of a high heating furnace using heavy oil or coke through simple treatment. Coloured antique effect is given by using a diamond tool.

Patent document US 6 841 785 relates to photo luminescent floor tile, which has the same manufacturing methods and equipment used to manufacture conventional floor tile. The invention is an improved photo luminescent floor tile that glows in the dark during a blackout. The improved floor tile can replace conventional floor tile and has the appearance of conventional floor tile under normal lighting. During a blackout, the entire floor glows to provide an extensive, failsafe supplemental photo luminescent lighting system.

US 6 818 275 patent relates to a composite tile for flooring without bonding to the ground. According to this invention, a composite floor tile is mounted onto a metal base material without bonding and then mounted with this base to the ground.

US 2004 241449 patent relates to a static-proof tile utilizing carbon. According to this invention, the tile shields static electricity conduction by using synthetic resin and carbon in its surface.

The invention, said in patent document US 2004 146 653, relates to a process for coating clay based biscuit tiles by using a polymer material not to need another heating. Biscuit tiles coated according to the process of US 2004 146 653 show heat, fire, and abrasion and scratch resistance.

US 2004 168388 refers to a tile composed of multi layers to use for construction. According to US 2004 168 388, natural wood lamina is bonding on to clay based ceramic or lamina substrate by a kind of glue or binder.

In patent document US 2003 205310, a multi-layer alumina enhanced thermal barrier tile and method of making the tile are described. They exhibit high strength, high temperature durability while exhibiting the superior insulative properties. Alumina or silica binders are used for binding insulative layers to each other.

The invention, said in EP 1 447 190 patent document, concerns a method for preparing and transferring granular material, in particular for feeding pressing moulds in the process for producing ceramic tiles.

US 5 814 572 patent describes an invention related to provide a glassy sintered body and to effectively reuse scrapped glass. The glassy sintered body of US 5 814 572 is made by preparing a raw material of the body by adding ceramic clay to glass as a main element so as to adjust the amount of water and kneading the glass and the clay, forming the raw material into a prescribed form, and sintering the formed material. These glassy sintered bodies are used as a substrate in the manufacturing of floor and wall tiles. To reuse the scrapped glass, e.g., glass bottles, is particularly aimed in this invention.

Unlikely from US 5 814 572 patent, the main material of antique-like tiles is quartz. In this invention, a glassy sintered body is obtained by adding glass to quartz as a main element in order to prepare three different body compositions. Besides this, a quartz based slip and a glaze are produced and under glaze decoration is done by using ceramic paints and metal oxides.

In this invention, frit and glass powders are used to provide low temperature sintering of the body. By this way, three type body compositions, a compatible slip and a glaze which are antique-like, are produced. The produced slip, paint and glaze compositions are applicable to all the three different body composition.

The inventions said above do not have similarity with this invention either in material properties or compositions.

### TECHNICAL PROBLEMS TO BE SOLVED

In this invention antique like decorative materials having similar composition and technical property could be produced using modern technologies. Pattern and decor property of produced materials is made in the dependence of original antique tiles.

### BRIEF DESCRIPTION OF THE INVENTION

This invention is related with the method for manufacturing quartz based multi-layered ceramic construction material that has antique tile properties. Particularly, it is taken care of using original antique pattern in decoration and design properties of produced material.

### DESCRIPTION OF THE DRAWINGS

In the present invention, the process related with the manufacturing of a multi-layer quartz based ceramic material which has antique-like properties is described and each layers of this material are shown in two diagrams completely and in the direction of cross sectional.

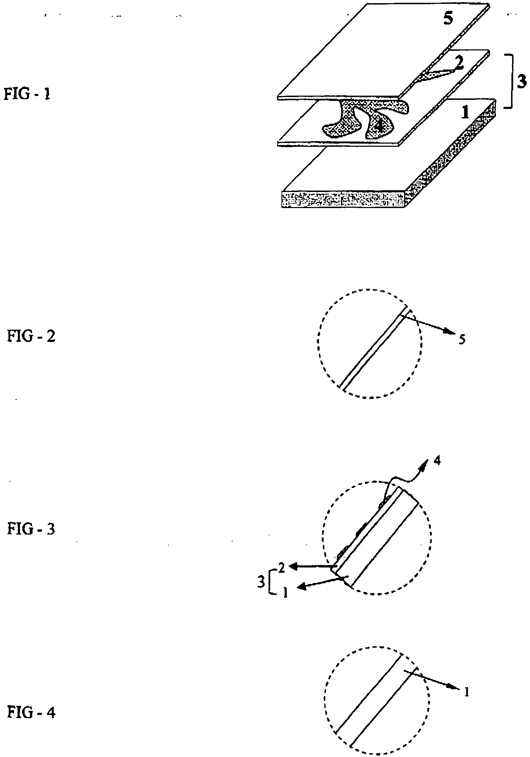

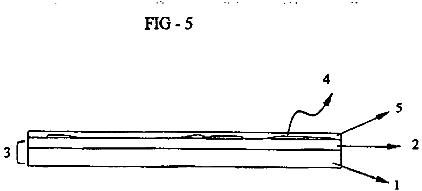

Figure 1,2,3,4. is showing all the layers of the tile separately and as a whole Figure 5. is showing all the layers from vertical cross section.

The numbers given in Figure 1, 2, 3, 4 and 5 symbolizes each layer separately.
(1); quartz based body for using as a substrate of the tile,
(2); slip which is compatible with quartz based body,
(3); two-layered glassy sintered body which is obtained by applying body compatible slip on quartz based body that can be used as a tile substrate,
(4); antique pattern and decoration layer applied onto sintered glassy substrate,
(5); layer which transparent glaze applied onto sintered and decorated substrate.

### DETAILED DESCRIPTION OF THE INVENTION

This invention is related with the method for manufacturing quartz based multi-layer (Figure 1,2,3,4,5) ceramic construction material and has antique-like tiles properties.

The objects of the present invention are;
1) Quartz based body (1)for using as a substrate of the tile,
2) Manufacturing of the slip(2) which is compatible with quartz based body
3) Onto the slipped body (substrate (3)), the application of antique like pattern and decor (4)
4) The application of lead alkaline transparent glaze(5) which has a low lead solubility property
1) In the first step, the glassy sintered body is produced by mixing clay and fluxes to the quartz homogeneously, forming and sintering. The composition of this body is given by % weight below. The body composition can be prepared in different recipes.

| Composition | *A* | *B* | *C* |
|---|---|---|---|
| SiO₂ % w | 88-93 | 89-91 | 93-96,5 |
| Al₂O₃ % w | 2-6 | 2-4 | 0,5-1 |
| PbO % w | 0-2 | 0,5-2 | 0-0,5 |
| FeO % w | 0-0,5 | 0-0,5 | 0-0,5 |
| CaO % w | 1-1,5 | 1-1,5 | 1-2 |
| Na₂O % w | 1-2 | 2-3 | 2-3 |

### Composition A

The body composition according to the invention contains 70-80 % quartz, 10-20 % glass powder, 6-10 % clay, 0-2 % red lead and binder additive. Soda-lime glass cullets are grounded and used as a source of glass powder. All contents are mixed by either dry or wet method with a high torque mixture for 2-3 h. In the wet mixing method, the mixture rested for a time to remove its bubbles. Then the mixture poured into the mould and dried at room temperature and/or in a drying room. In the dry mixing method, after obtaining a homogeneous powder granulation and forming by pressing is followed.

### Composition B

The body composition according to the invention contains 70-80 % quartz, 10-20 % glass powder, 8-12 % clay, 2-6 % frit and binder additive. Scrap soda-lime glass cullets are grounded and used as a source of glass powder. As frit source, a lead frit is used. All the contents are mixed by either dry or wet method in a high torque mixture for 2-3 h. In the wet method, the mixture is rested for a time to remove its bubbles. Then the mixture is poured into the mould and dried at room temperature and/or in a controlled drying room conditions. In the dry mixing method, after obtaining a homogeneous powder granulation and forming by pressing is followed.

### Composition C

The body composition according to the invention contains 50-70 % silica sand, 20-40 % glass powder, 4-10 % clay and binder additive. Silica sand and dry clay are mixed in a high torque mixture for 1 h. The mixture is rested for a time to remove its bubbles. Then the mixture is poured into a mould and dried at room temperature and/or in a controlled drying room.

The shaping can be done for the said compositions by using square or rectangular blocks.
2) In the second step, manufacturing of a quartz-based slip that is compatible with a quartz-based body is done to use these as a tile substrate. The composition of this slip is 70-75 % quartz, 8-12 % clay, %12-18 glass powder and 0-3 % kaolin by % weight. Powder mixture is homogeneously mixed by adding 30 % water and a deffloculant material to adjust the density of mixture as 1,5-1,7 g/cm³ and viscosity as 30-45 s with Ford cup B4. Firing colour of this slip is white and all properties are adaptable for the three different receipted quartz based bodies. The said slip applied body (substrate) has a low vitrification temperature and has a firing temperature range as 900-1000°C.
3) As the third step pattern drawings representing the antique tile designs are made by carbon powder on quartz based glassy sintered substrate. Essentially, the antique tile colour tones are used for under glaze decorations and hand made by paintbrush using ceramic pigments and metal oxides.
4) In the fourth step; the decorated substrate coated with a glaze suspension, which is compatible with the slip and pigment. The glaze suspension is prepared with the produced frit. The composition of the glaze by % weight is; 99 % lead alkaline frit, 1 % kaolin and a deffloculant additive. The mixture is homogeneously mixed by the additives of water to adjust the density of the mixture as 1,7-1,8 g/cm³ and viscosity as 30-45 s with Ford cup B4. The said decorated substrate is applied with this glaze and after drying it is matured at 900-1000°C.

The chemical resistance of the produced material, which has antique-like properties, is high and lead solubility values are approximately 0,2 mg/dm². The Vickers micro hardness values are in the range of 4,9-5,9 GPa.

### EXAMPLES

In this section, a few examples related with quartz based multi-layered substrate will be shown.

### EXAMPLE 1

The composition of the mixture by % weight including glass, clay, quartz and red lead is;

| | |
|---|---|
| Quartz | % 75 |
| Glass | % 15 |
| Clay | % 8 |
| Red Lead | % 2 |

This composition consists of 1-1,5 % gum arabic by weight on the dry material base. The water content of the mixture is adjusted by mixing glass powder with clay. The mixture is shaped into a wooden tile mould. After its surface is coated with quartz-based slip, which has a composition of 70-75 % quartz, 8-12 % clay, % 12-18 glass and 0-3 % kaolin, by weight, the substrate is sintered at 900-1000°C.

### EXAMPLE 2

The composition of the mixture by % weight including glass, clay, quartz and frit is;

| | |
|---|---|
| Quartz | % 71 |
| Glass | % 15 |
| Clay | % 10 |
| Frit | % 4 |

This composition consists of 1-1,5 % gum arabic by weight on the base of dry material. The mixture is shaped into a wooden tile mould. After its surface is coated with quartz-based slip, which has a composition of 70-75 % quartz, 8-12 % clay, % 12-18 glass and 0-3 % kaolin, by weight, the substrate is sintered at 900-1000°C.

### EXAMPLE 3

The silica sand, glass powder and clay are mixed in the given amounts below, shaped and after its surface coated is with a quartz based slip which has a composition of 70-75 % quartz, 8-12 % clay, %12-18 glass and 0-3 % kaolin by weight, it is fired at 900-1000°C. Scrapped soda-lime glass cullets are grounded and used as glass source.

| | |
|---|---|
| Silica Sand | % 65 |
| Glass Powder | % 30 |
| Clay | % 5 |

### APPLICATION OF THE INVENTION TO INDUSTRY

Bodies mentioned in this invention have good properties like hardness, durability, and aesthethetic and possess the microstructural property of antique tiles. It is possible to apply slip and glaze on 3 different produced bodies. These have the advantages of firing property in the similar firing range and having vitrification property in low temperatures. Invention can be find application area aesthetically by the pigment, decoration and glaze application.

These materials can be used as interior and exterior wall coverings, tile construction and decoration materials.

## Claims

1. Manufacturing method of decoration material having antique tile property, consists of
a) Manufacturing of quartz based body (1) to be used as tile substrate wherein the quartz based body (1) comprises frit and glass powders
b) Manufacturing of slip (2) having a compatible composition with the quartz based body (1)
c) Application of the slip onto the quartz based body in order both (1) and (2) to form the tile substrate (3)
d) Firing of substrate (3)
e) Application of antique pattern and under glaze decoration (4) over the tile substrate (3)
f) Application of glaze (5), which is compatible with the slip and pigments over the decoration applied on substrate surface and following sintering procedures.

2. A manufacturing method of decorative material according to Claim 1 consists of
a) Manufacturing of quartz based body (1) to be used as decorative material substrate by mixing a silica source, glass powder, clay, flux and a binder, then shaping and drying
b) Compounding of a slip that is compatible with the quartz based body, from the quartz, clay, glass and kaolin, application over the body and firing
c) Application of antique pattern and under glaze decoration over the body with slip
d) Application of glaze that is compatible with the slip and pigments over the decoration applied on surface of substrate and following sintering procedures.

3. A manufacturing method of decorative material according to Claim 1, 2 consists of
a) Blending and mixing by weight of 50-80 % silica source, 10-40 % glass powder, 4-12 % clay, 0-6 % flux and binder, shaping and drying at room temperature and/or at a controlled drying room to produce a quartz based body to be used as decorative material substrate
b) Mixing by weight of 70-75 % silica source, 12-18 % glass powder, 8-12 % clay, 0-3 % kaolin to prepare a slip that is compatible with the quartz based body, application over the body and firing
c) Application of antique pattern and under glaze decoration by inorganic oxides, ceramic pigments and metal oxides over the body with slip
d) Application of lead-alkaline transparent glaze that has low lead solubility and compatible with the slip and pigments over the decoration applied on substrate surface and following sintering procedures.

4. A manufacturing method of decorative material according to Claim 1 and 2 wherein the composition of sintered glassy body consists of by weight;
| | |
|---|---|
| SiO₂ | 86,5-93 % |
| Al₂O₃ | 0,5-6 % |
| PbO | 0-2 % |
| FeO | 0-0,5 % |
| CaO | 1-2 % |
| Na₂O | 1-3 % |

5. A manufacturing method of decorative material according to Claim 1 and 2 wherein, quartz and silica sand are preferable as a silica source.

6. A manufacturing method of decorative material according to Claim 1 and 2 wherein, lead oxide, lead frit and glass powder are preferable as a flux.

7. A manufacturing method of decorative material according to Claim 6 wherein the molar composition of a lead frit is as 30-40 % PbO, 50-70 % SiO₂, 0,1-5 % Al₂O₃.

8. A manufacturing method of decorative material according to Claim 7 wherein the molar composition of a lead frit is preferably as 33,60 % PbO, 65,27 % SiO₂, 1,13 % Al₂O₃.

9. A manufacturing method of decorative material according to Claim 1 wherein the quartz based body is manufactured by mixing a flux to clay, blending mixture homogeneously with quartz and shaping.

10. A manufacturing method of decorative material according to Claim 2-7 wherein the content of iron oxide in the clay is 0-1 % by weight.

11. A manufacturing method of decorative material according to Claim 1 and 2 wherein a slip that is compatible with the quartz based body has a composition consist of 70-75 % quartz, 8-12 % clay, 12-18 % glass, 0-3 % kaolin by weight.

12. A manufacturing method of decorative material according to Claim 1, 2 and 11 wherein a slip is prepared by adjusting with deffloculant material and 20-40% water addition in order to obtain a mixture density as 1,5-1,7 g/cm³, viscosity as 35 s with Ford cup 4.

13. A manufacturing method of decorative material according to Claim 1, 2, 11 and 12 wherein a body with slip is fired at 800-1000°C.

14. A manufacturing method of decorative material according to Claim 1 and 2 wherein antique pattern and under glaze decoration is prepared according to colour tones of antique tiles and inorganic oxides, ceramic pigments and metal oxides are used in the preparation.

15. A manufacturing method of decorative material according to Claim 1 and 2 wherein a glaze that is compatible with slip and pigments is applied on a slip coated and decorated body, has a composition of 99 % frit and 1 % kaolin, is adjusted with deffloculant material and water addition in order to obtain a mixture density as 1,7-1,8 g/cm³, viscosity as 30-45 s with Ford cup 4.

16. A manufacturing method of decorative material according to Claim 1, 2 and 15 wherein a glaze application is made by a frit based lead alkaline transparent glaze that has a low lead solubility.

17. A manufacturing method of decorative material according to Claim 1, 2, 15 and 16 wherein a glaze is sintered preferably at 900-1000 °C.

18. Materials having antique tile property which has a manufacturing method as mentioned in claims 1, 2 , have high chemical resistance, lead solubility values in the range of 0-0,5 mg/dm², Vickers micro hardness values in the range of 4,9-5,9 GPa.

## Patentansprüche

1. Ein Verfahren zur Herstellung von Dekorationsmaterial mit antiken Flieseneigenschaften, bestehend aus folgenden Schritten:
a) Herstellung eines auf Quarz basierenden und als Substrat dienenden sowie Fritten und Glaspulver beinhaltenden Körpers (1),
b) Herstellung einer in der Zusammensetzung mit dem auf Quarz basierenden Fliesenkörper (1) kompatiblen Unterschicht (2);
c) Auftragen der Unterschicht (2) auf den auf Quarz basierenden Fliesenkörper (1) zur Bildung des Fliesensubstrates (3);
d) Feuerungsbrennen des Substrates (3);
e) Aufbringung eines antiken Musters und Unterglasurdekoration (4) auf das Fliesensubstrat (3);
f) Aufbringung der mit der Unterschicht (2) und den Pigmenten kompatiblen Glasur (5) auf die auf der Substratoberfläche aufgebrachten Dekoration und nachfolgende Sinterung.

2. Ein Verfahren zur Herstellung von Dekorationsmaterial gemäß Anspruch 1, bestehend aus folgenden Schritten:
a) Herstellung eines als Substrat für Dekorationsmaterial dienenden auf Quarz basierenden Körpers (1) durch die Mischung von Siliziumdioxidquelle, Glaspulver, Ton, Flussmittel und einem Binder samt nachfolgender Formung und Trocknung;
b) Herstellung einer mit dem auf Quarz basierenden Körpers kompatiblen Unterschicht bestehend aus Quarz, Ton, Glass und Kaolin, deren Aufbringung auf den auf Quarz basierenden Körper zur Bildung eines Substrates und Feuerungsbrennen des Substrates;
c) Aufbringung eines antiken Musters und Unterglasurdekoration des Körpers samt Unterschicht (des Substrates);
d) Aufbringung der mit der Unterschicht auf dem Körper und den Pigmenten kompatiblen Glasur auf die Dekoration auf der Oberfläche des Substrates und nachfolgende Sinterung.

3. Ein Verfahren zur Herstellung von Dekorationsmaterial gemäß den Ansprüchen 1 und 2, bestehend aus folgenden Schritten:
a) Vermengen und Mischen von 50-80 Gewichtsprozenten Siliziumdioxidquelle, 10-40 Gewichtsprozenten Glas
b) pulver, 4-12 Gewichtsprozenten Ton, 0-6 Gewichtsprozenten Flussmittel und Binder, Formung und Trocknung bei Zimmertemperatur und/oder in einem kontrollierten Trockenraum zur Bildung eines auf Quarz basierenden Körpers zur Nutzung als Dekorationsmaterialsubstrat;
c) Mischen von 70-75 Gewichtsprozenten Siliziumdioxidquelle, 12-18 Gewichtsprozenten Glaspulver, 8-12 Gewichtsprozenten Tom, 0-3 Gewichtsprozenten Kaolin zur Herstellung einer mit dem auf Quarz basierenden Körper Unterschicht, Aufbringung derselben auf den Körper und anschließendes Feuerungsbrennen;
d) Aufbringung eines antiken Musters und einer Unterglasurdekoration bestehend aus anorganischen Oxiden, keramischen Pigmenten und Metalloxiden auf den oben beschriebenen und mit der Unterschicht versehenen Körper;
e) Aufbringung einer transparenten alkalischen, mit der Unterschicht und den Pigmenten kompatiblen Bleiglasur mit einer niedrigen Bleilässigkeit auf die auf der Oberfläche des Substrates aufgebrachten Dekoration und anschließende Sinterung.

4. Ein Verfahren zur Herstellung von Dekorationsmaterial gemäß den Ansprüchen 1 und 2, **dadurch gekennzeichnet dass** die Zusammensetzung des gesinterten glasigen Körpers nach Gewichtsprozenten wie folgt aufweist: SiO₂ 86,5-93%, Al₂O₃ 0,5-6%, PbO 0-2%, FeO 0-0,5%, CaO 1-2%, Na₂O 1-3%.

5. Ein Verfahren zur Herstellung von Dekorationsmaterial gemäß den Ansprüchen 1 und 2, **dadurch gekennzeichnet dass** Quarz und Kieselerde als Siliziumdioxidquelle vorzuziehen sind.

6. Ein Verfahren zur Herstellung von Dekorationsmaterial gemäß den Ansprüchen 1 und 2, **dadurch gekennzeichnet dass** Bleioxid, Bleifritten und Glaspulver als Flussmittel vorzuziehen sind.

7. Ein Verfahren zur Herstellung von Dekorationsmaterial gemäß Anspruch 6, **dadurch gekennzeichnet dass** die molare Zusammensetzung der Bleifritten wie folgt entspricht: 30-40% PbO, 50-70% SiO₂, 0,1-5% Al₂O₃.

8. Ein Verfahren zur Herstellung von Dekorationsmaterial gemäß Anspruch 7, **dadurch gekennzeichnet dass** die bevorzugte molare Zusammensetzung der Bleifritten wie folgt entspricht: 33,60% PbO, 65,27% SiO₂, 1,13% Al₂O₃.

9. Ein Verfahren zur Herstellung von Dekorationsmaterial gemäß Anspruch 1, **dadurch gekennzeichnet dass** der auf Quarz basierende Körper durch eine Vermischung des Flussmittels mit dem Ton, eine homogene Vermengung der Mischung mit Quarz und die anschließende Formgebung hergestellt wird.

10. Ein Verfahren zur Herstellung von Dekorationsmaterial gemäß den Ansprüchen 2 bis 7, **dadurch gekennzeichnet dass** der Eisenoxidgehalt im Ton 0 bis 1 Gewichtsprozent beträgt.

11. Ein Verfahren zur Herstellung von Dekorationsmaterial gemäß den Ansprüchen 1 und 2, **dadurch gekennzeichnet dass** die mit dem auf Quarz basierenden Körper kompatible Unterschicht eine Zusammensetzung nach Gewichtsprozenten wie folgt aufweist: 70-75% Quarz, 8-12% Ton, 12-18% Glas, 0-3% Kaolin.

12. Ein Verfahren zur Herstellung von Dekorationsmaterial gemäß den Ansprüchen 1, 2 und 11, **dadurch gekennzeichnet dass** die Unterschicht derart mit einem Entflockungsmittel unter Zugabe von 20-40% Wasser hergestellt wird, dass dadurch eine Mischungsdichte von 1,5-1,7 g/cm³ und eine Viskosität von 35 s aus einem Ford Becher 4 erreicht wird.

13. Ein Verfahren zur Herstellung von Dekorationsmaterial gemäß den Ansprüchen 1, 2, 11 und 12, **dadurch gekennzeichnet dass** der Träger samt Unterschicht bei einer Feuerungstemperatur von 900-1000°C gebrannt wird.

14. Ein Verfahren zur Herstellung von Dekorationsmaterial gemäß den Ansprüchen 1 und 2, **dadurch gekennzeichnet dass** das antike Muster und die Unterglasurdekoration entsprechend der Farbgebung antiker Fliesen erfolgt, und dass anorganische Oxide, keramische Pigmente und Metalloxide in der Herstellung verwendet werden.

15. Ein Verfahren zur Herstellung von Dekorationsmaterial gemäß den Ansprüchen 1 und 2, **dadurch gekennzeichnet dass** die mit der Unterschicht und den Pigmenten kompatible und auf einen beschichteten und dekorierten Körper aufgebrachte Glasur eine Zusammensetzung aus 99% Fritten und 1% Kaolin aufweist und derart mit Entflockungsmittel und der Zugabe von Wasser hergestellt wird, dass dadurch eine Mischungsdichte von 1,7-1,8 g/cm³ und eine Viskosität von 30-45 s aus einem Ford Becher 4 erreicht wird.

16. Ein Verfahren zur Herstellung von Dekorationsmaterial gemäß den Ansprüchen 1, 2 und 15, **dadurch gekennzeichnet dass** für die aufzubringende Glasur eine transparente alkalische Bleiglasur mit niedriger Bleilässigkeit verwendet wird.

17. Ein Verfahren zur Herstellung von Dekorationsmaterial gemäß den Ansprüchen 1, 2, 15 und 16, **dadurch gekennzeichnet dass** die Glasur vorzugsweise bei einer Temperatur von 900-1000°C gesintert wird.

18. Gegenstände mit antiken Flieseneigenschaften, die entsprechend den in Ansprüchen 1 und 2 beschriebenen Verfahren hergestellt werden, weisen eine hohe chemische Resistenz, eine Bleilässigkeit im Bereich von 0 bis 0,5 mg/dm² und eine Mikrohärte nach Vickers im Bereich von 4,9-5,9 Gpa auf.

## Revendications

1. La méthode de fabrication du matériel de décoration ayant les caractéristiques de tuile antique se compose de
a) La fabrication du corps à base de quartz (1) devant être utilisé comme substrat de carreau où le corps à base de quartz (1) comprend des poudres de fritte et de verre
b) La fabrication de la barbotine (2) ayant une composition compatible avec le corps à base de quartz (1)
c) L'application de la barbotine sur le corps à base de quartz (1) et (2) pour former le substrat de carreau (3)
d) La cuisson du substrat (3)
e) L'application du modèle antique sous le vernis (4) et sur le substrat de carreau (3)
f) L'application du vernis (5), qui est compatible avec la barbotine et les pigments, sur la décoration appliquée sur la surface du substrat et suivant les procédures de frittage.

2. Une méthode de fabrication du matériel décoratif selon la revendication 1 se compose de
a) La fabrication du corps à base de quartz (1) à employer en tant que substrat de matériel décoratif en mélangeant une source de silice, de la poudre de verre, de l'argile, un fondant et un liant, puis le façonnage et le séchage.
b) La préparation d'une barbotine qui est compatible avec le corps à base de quartz, à partir de quartz, d'argile, de verre et de kaolin; application sur le corps et cuisson
c) L'application du modèle antique sous le vernis sur le corps avec de la barbotine
d) L'application du vernis qui est compatible avec la barbotine et les pigments sur la décoration appliquée sur la surface du substrat et suivant les procédures de frittage.

3. Une méthode de fabrication du matériel décoratif selon la revendication 1, 2 se compose
a) Du mélange par poids de 50- 80 % de source de silice, 10-40 % de verre
b) De poudre, 4-12 % d'argile, 0-6 % de fondant et liant, façonnage et séchage à température ambiante et/ou dans une salle de séchage contrôlée pour produire un corps à base de quartz à employer comme substrat de matériel décoratif
c) Du mélange par poids de 70-75 %, 12-18 % de poudre de verre, 8-12 % d'argile, 0-3 % de kaolin pour préparer une barbotine qui est compatible avec le corps à base de quartz, application sur le corps et cuisson
d) De l'application de modèle antique et sous le vernis par les oxydes inorganiques, les colorants de céramique et les oxydes de métal sur le corps avec la barbotine.
e) De l'Application du vernis transparent plomb-alcalin qui a une solubilité à faible teneur en plomb et est compatible avec la barbotine et les pigments sur la décoration appliquée sur la surface de substrat et suivant les procédures de frittage.

4. Une méthode de fabrication du matériel décoratif selon les Revendications 1 et 2 où la composition du corps vitreux fritté se compose par poids de ;
| | |
|---|---|
| SiO₂ | 86.5- 93 % |
| Al₂O₃ | 0,5-6 % |
| PbO | 0-2 % |
| FeO | 0-0,5 % |
| CaO | 1-2 % |
| Na₂O | 1-3 % |

5. Une méthode de fabrication de matériel décoratif selon les Revendications 1 et 2 où il est préférable d'utiliser du quartz et du sable de silice comme source de silice.

6. Une méthode de fabrication de matériel décoratif selon les Revendications 1 et 2 où il est préférable d'utiliser de l'oxyde de plomb et de la poudre de verre comme fondant.

7. Une méthode de fabrication de matériel décoratif selon la Revendication 6 où la composition molaire d'une fritte de plomb est de 30- 40 % PbO, 50- 70 % SiO₂, 0.1-5 % Al₂O₃.

8. Une méthode de fabrication de matériel décoratif selon la Revendication 7 où la composition molaire d'une fritte de plomb est de préférence de 33,60 % PbO, 65,27 % SiO₂, 1,13 % Al₂O₃.

9. Une méthode de fabrication de matériel décoratif selon la Revendication 1 où le corps à base de quartz est fabriqué en mélangeant un fondant à l'argile, en mélangeant la mixture de manière homogène avec le quartz et en le façonnant.

10. Une méthode de fabrication de matériel décoratif selon les Revendications 2-7 où la teneur en oxyde de fer dans l'argile est de 0-1 % par poids.

11. Une méthode de fabrication de matériel décoratif selon les Revendications 1 et 2 où une barbotine qui est compatible avec le corps à base de quartz a une composition de 70- 75 % de quartz, 8-12 % d'argiles, 12-18 % de verre, 0-3 % de kaolin par poids.

12. Une méthode de fabrication de matériel décoratif selon les Revendications 1, 2 et 11 où une barbotine est préparée en ajustant avec du défloculant et en ajoutant 20-40% d'eau pour obtenir une densité de mélange de 1.5-1.7 g/cm³, une viscosité de 35 s avec la coupelle Ford n° 4.

13. Une méthode de fabrication de matériel décoratif selon les Revendications 1, 2, 11 et 12 où un corps avec de la barbotine est cuit à 900-1000°C.

14. Une méthode de fabrication de matériel décoratif selon les Revendications 1 et 2 où le modèle antique sous le vernis est préparé selon les tons de couleur des carreaux antiques, et des oxydes inorganiques, des colorants de céramique et des oxydes de métal sont employés dans la préparation.

15. Une méthode de fabrication de matériel décoratif selon les Revendications 1 et 2 où un vernis qui est compatible avec la barbotine et les colorants est appliqué sur un corps décoré et enduit de barbotine, a une composition de 99 % de fritte et de 1 % kaolin, est ajustée avec du défloculant et en ajoutant de l'eau afin d'obtenir une densité de mixture de 1.7-1.8 g/cm³, et une viscosité de 30-45 s avec la coupelle de Ford n° 4.

16. Une méthode de fabrication de matériel décoratif selon les Revendications 1, 2 et 15 où un vernis transparent de plomb alcalin à base de fritte et ayant une solubilité à faible teneur en plomb est appliqué.

17. Une méthode de fabrication de matériel décoratif selon les Revendications 1, 2, 15 et 16 où un vernis est fritté de préférence à 900-1000 °C.

18. Les matériaux avec les caractéristiques de carreau antique ayant une méthode de fabrication mentionnée dans les revendications 1 et 2 ont une résistance chimique élevée, des valeurs de solubilité de plomb entre 0 et 0.5 mg/dm², et des valeurs de microdureté de Vickers entre 4.9 et 5.9 GPa.
